# EUROPÄISCHE PATENTSCHRIFT

(11) **EP 2 025 536 B1**
(45) Veröffentlichungstag und Bekanntmachung des Hinweises auf die Patenterteilung: **23.09.2009**
(21) Anmeldenummer: 08014105.4
(22) Anmeldetag: 07.08.2008
(51) Int. Cl.: B60D 1/58, B60D 1/14, B62D 13/02

(54) **Anhänger mit Deichsel und Winkelsensor**
Trailer with tow bar and angle sensor
Remorque dotée d'un timon et d'un capteur d'angle

(30) Priorität: 15.08.2007 DE 102007038665
(43) Veröffentlichungstag der Anmeldung: 18.02.2009
(73) Patentinhaber: Josef Kotte Landtechnik GmbH & Co. KG, 49597 Rieste (DE)
(72) Erfinder: Johanning Prof. Dr., Bernd, 49326 Melle (DE); Munsberg, Heinrich, 49504 Lotte-Wersen (DE); Bröcker, Markus, 49176 Hilter a.T.W. (DE)
(74) Vertreter: Weeg, Thomas

(56) Entgegenhaltungen:
- DE-A1- 3 439 409
- US-B1- 6 450 523

## Beschreibung

Die vorliegende Erfindung bezieht sich auf einen Anhänger mit einer Deichsel, einer mit einer Steuerung versehenen Lenkvorrichtung und einem mit der Steuerung verbundenen Sensor, mit dem der Winkel und/oder eine Veränderung des Winkels der Deichsellängsachse zur Längsachse eines Zugfahrzeugs ermittelbar ist. Die Erfindung bezieht sich auch auf einen Sensor, mit dem der Winkel und/oder eine Veränderung des Winkels einer Deichsellängsachse zur Längsachse eines Zugfahrzeugs ermittelbar ist.

Aus dem Stand der Technik sind Anhänger bekannt, die über eine eigene Lenkvorrichtung verfügen. Anhänger werden insbesondere dann mit einer eigenen Lenkvorrichtung ausgestattet, wenn die Anhänger besonders lang sind oder wenn besondere Anforderungen an die Wendigkeit des mit dem Zugfahrzeug verbundenen Anhängers als Gespann gestellt werden.

Ein Beispiel für einen gattungsgemäßen Anhänger findet sich in der Schrift US 6,450,523 B1. In dieser Schrift ist ein Sensor offenbart, mit dem eine Veränderung des Winkels der Deichsellängsachse zum Anhänger beziehungsweise zum Zugfahrzeug gemessen und der gemessene Sensorwert an eine elektronische Steuerung übermittelt wird, von der aktiv lenkbare Räder des Anhängers über eine entsprechende Aktorik steuerbar sind. Die Aktorik kann einen hydraulischen, elektrohydraulischen oder elektrischen Antrieb aufweisen. Es können eine einzige, mehrere oder alle Achsen eines Anhängers lenkbar ausgestaltet sein.

Aus der Schrift DE 10 2005 019 827 A1 ist es bekannt, die Kugelkupplung eines Gespanns bestehend aus einem Antriebsfahrzeug und einem Anhänger mit einem Winkelstellungssensor zu versehen. Der Winkelstellungssensor kann dazu genutzt werden, um die Relativstellung der Deichsel zum Zugfahrzeug als Eingangsgröße für eine Fahrzeugsteuerung zu nutzen.

Bei den bekannten Sensoren hat es sich als nachteilig erwiesen, dass in die Messung der Winkelstellung Störgrößen wie Nickschwingungen zwischen dem Zugfahrzeug und dem Anhänger oder Wankbewegungen des Zugfahrzeugs und des Anhängers als Veränderungen der Winkellage der Deichsel zum Zugfahrzeug erkannt werden, obwohl sich die Winkellage abgesehen von den Nickschwingungen beziehungsweise Wankbewegungen nicht verändert hat. Da aus dem Sensorsignal von der Steuerung Sollstellwerte für die Lenkung des Anhängers abgeleitet werden, können die vom Sensor detektierten Wank- und Nickbewegungen unerwünschte Lenkreaktionen des Anhängers auslösen. Nick- und Wankbewegungen führen auch deshalb zu besonders häufigen Lenkbewegungen des Anhänger-Lenkungssystems, weil bei der Fahrt eines Gespanns zunächst die Zugmaschine wankt bzw. nickt, was von den bekannten Sensoren jeweils als Bewegung registriert wird, und sodann auch der Anhänger noch dieselben Wank- und Nickbewegungen macht, welche wiederum als Lenkbewegungen vom Sensor registriert werden. Die ersten Wank- und Nickbewegungen des Zugfahrzeugs können bereits in der Steuerung eine Lenkbewegung des Anhängers ausgelöst haben, zu denen dann ein weiterer von der Steuerung ausgelöster Lenkimpuls hinzukommen kann. In ungünstigen Fällen ist es auf diese Weise möglich, dass die Wank- und Nickbewegungen über die Steuerung zu Gegenlenkreaktionen am Anhänger führen, durch die das gesamte System aufgeschaukelt wird. Durch die von den Nick- und Wankbewegungen provozierten Lenkbewegungen des Anhängers fühlt sich das Gespann für den Fahrer des Zugfahrzeuges leicht instabil an.

Je größer die Nick- oder Wankbewegungen ausfallen, um so größer sind auch die Lenkbewegungen des Anhängers, die sich aus den vom Sensor ermittelten Lenkbewegungsdaten ergeben. Bei Off-Road-Anwendungen mit besonders unebenen Bodenverhältnissen wie beispielsweise in der Landwirtschaft ergeben sich deshalb besonders ausgeprägte Eigenlenkbewegungen eines Anhängers, obwohl dort zur flächendeckenden Bodenbearbeitung, Ausbringung von Spritzmitteln oder Gülle, Aussaat oder Ernte oder aus Gründen des Umweltschutzes wie beispielsweise der Vermeidung einer unerwünschten Bodenverdichtung ein möglichst präzises Spurhalten gewünscht ist. Bei einem Radieren der Räder über dem Boden ergibt sich einerseits ein erhöhter Reifenverschleiß, bei landwirtschaftlichen Anwendungen kann aber durch das Radieren der Räder auch die Grasnarbe oder der sonstige Bewuchs einer befahrenen Fläche beschädigt werden.

Um ein Radieren der Reifen über den Boden zu vermeiden, wenn das beim Anhänger eingestellte Lenkverhalten nicht zur Kurvenfahrt des Zugfahrzeuges passt, ist eine möglichst präzise Erfassung des Anstellwinkels der Deichsel zum Zugfahrzeug erforderlich.

Es ist die Aufgabe der vorliegenden Erfindung, einen Sensor zu schaffen, mit dem es möglich ist, den Anstellwinkel der Deichsel relativ zum Zugfahrzeug mit geringeren Störeinflüssen zu ermitteln.

Die Aufgabe wird für einen gattungsgemäßen Anhänger gelöst, indem der Sensor ein Kraftübertragungsmittel aufweist, das an zwei in horizontaler Richtung zueinander beabstandeten und ortsfesten Befestigungspunkten mit dem Zugfahrzeug verbindbar ist, der Sensor einen ortsfest mit der Deichsel verbundenen Meßpunkt aufweist, an dem mit einer Meßvorrichtung eine horizontale Lageveränderung einer Linie zwischen den genannten beabstandeten beiden Befestigungspunkten relativ zur Deichsellängsachse durch eine Auswertung der Bewegung des Kraftübertragungsmittels im Verhältnis zum Meßpunkt meßbar ist, und der Meßpunkt abgestützt ist auf einem Lagerpunkt, der zumindest annähernd in der Wankachse der Deichsel angeordnet ist.

Die Aufgabe wird mit einer entsprechenden Ausgestaltung auch nur für einen gattungsgemäßen Sensor gelöst.

Mit einem erfindungsgemäß ausgestalteten Sensor ist es möglich, die Zahl der vom Sensor als Lenkbewegung registrierten Störeinflüsse, insbesondere Wankbewegungen, zu reduzieren und dadurch das Lenkverhalten eines Anhängers und/oder eines Gespanns entsprechend zu stabilisieren. Die Zahl der überflüssigen Lenkbewegungen wird verringert. Durch die insgesamt präzisere Messung des Anstellwinkels der Deichsel kann das Soll-Lenkungsverhalten des Anhängers zudem präziser bestimmt werden. Für den Fahrer ergibt sich ein besseres Lenkverhalten des Gespanns und ein sichereres Fahrgefühl. Das Risiko, dass die Räder auf dem Boden radieren könnten, wird verringert und es wird ein prinzipiell einfach aufgebauter Sensor vorgeschlagen, der kostengünstig herstellbar ist, vergleichsweise präzise Meßwerte liefert und der einen grundsätzlich robusten und ausfallsicheren Grundaufbau bietet.

Damit ist der erfindungsgemäße Sensor insbesondere für Off-Road-Anwendungen besonders geeignet. Gerade bei landwirtschaftlichen Anwendungen werden mit den Anhängern häufig schwere Lasten transportiert, wie beispielsweise 20 oder 30 m³ Flüssigkeiten, die bei Lenkbewegungen in Bewegung geraten und ihrerseits wieder Wank- und/oder Nickbewegungen auslösen können. Bei landwirtschaftlichen Anwendungen ist es wünschenswert, einen Anhänger anhand des Sensorsignals mit verschiedenen Lenkstrategien bewegen zu können, beispielsweise, um den Anhänger im Hundegang, zum Ausgleich einer Hangabtrift, in der Spur des Zugfahrzeugs, im Nachlauf oder im Rangierbetrieb mit besonders engen Einschlagwinkeln und Wenderadien zu fahren, unabhängig davon, ob die Strategieauswahl manuell durch den Bediener oder automatisiert durch die Steuerung erfolgt. Mit dem präzisieren Sensorsignal, aus dem durch die besondere Gestaltung des Sensors Störeinflüsse zumindest verringert werden, ist ein solcher Betrieb möglich. Auch für die Steuerung der Lenkung oder der Seitenlage von gezogenen Arbeitsmaschinen, wie beispielsweise Ballenpressen, Ladewagen, Mähwerke, Wender, Schwader, Feldspritzen, Düngerstreuern und dergleichen ist der Sensor gut verwendbar. Bei solchen Anhängern wie beispielsweise Mähwerken, die nicht über ein eigenes gelenktes Radfahrwerk verfügen, sondern in ihrer Relativstellung zum Zugfahrzeug über einen verstellbaren Haltearm gelenkt werden, entspricht der verstellbare Haltearm der Lenkung im Sinne dieser Erfindung.

Mit dem erfindungsgemäßen Sensor kann auf dem Anhänger ein Lenkungssystem aufgebaut werden, das unabhängig vom Lenkungssystem des Zugfahrzeugs betreibbar ist. Schnittstellen mit dem Lenkungssystem des Zugfahrzeuges werden dadurch vermieden. Das Lenkungssystem eines Anhängers kann autonom aufgebaut und betrieben werden. Wegen des präzisen Sensorsignals ist die Funktion der Anhängerlenkung auch in vollem Umfang automatisierbar.

Da das erfindungsgemäße System einfach aufgebaut und leicht an einer handelsüblichen Deichsel montierbar ist, kann der Sensor auch an gebrauchten Anhängern nachgerüstet werden. Da der Sensor und die Steuerung der Lenkung unabhängig vom Zugfahrzeug betreibbar sind, können auch mit dem Sensor ausgestattete Anhänger an jedem beliebigen Zugfahrzeug angehängt werden. Diese Option ist insbesondere bei Flottenbetreibern interessant, bei denen wechselnde Paarungen von Zugfahrzeugen und Anhängern im ständigen Einsatz sind.

Um insbesondere auch die Nickbewegungen aus den Sensorsignalen ausfiltern zu können, wird vorgeschlagen, den Sensor so zu gestalten, dass eventuelle Nickbewegungen des Zugfahrzeuges und/oder des Anhängers nicht auf die Meßvorrichtung übertragen werden. Dies ist möglich, wenn die Befestigungspunkte zumindest annähernd in einer Achse zur Anhängung der Deichsel am Zugfahrzeug angeordnet sind oder das Kraftübertragungsmittel, der Meßpunkt und/oder der Lagerpunkt einen flexiblen Längenausgleich in Richtung der Deichsellängsachse aufweisen.

Nach einer Ausgestaltung der Erfindung ist das Kraftübertragungsmittel als Gestänge oder Treibriemen ausgebildet. Mit diesen Mitteln läßt sich eine Relativbewegung des Zugfahrzeugs im Verhältnis zur Deichsellängsachse leicht auf die Meßvorrichtung übertragen.

Auch wenn die Erfindung prinzipiell für alle Kupplungssysteme geeignet ist, mit denen ein Zugfahrzeug mit einem Anhänger zusammenkuppelbar ist, empfiehlt sich die Benutzung der Erfindung insbesondere bei Kugelkopfkupplungen. Da der zugfahrzeugseitige Kugelkopf zumindest halbkugelig rund gestaltet ist und das anhängerseitige Kupplungsaufsatzteil auf seiner Innenoberfläche ebenfalls eine entsprechende halbkugelige Form aufweist, die zum Mittelpunkt des Kugelkopfs konzentrisch gestaltet ist, so dass das Kupplungsaufsatzteil frei auf dem Kugelkopf gleiten kann, ergeben sich für Relativbewegungen zwischen den einzelnen Kupplungsteilen erhebliche Freiheitsgrade, die vom Sensor dann als Winkelveränderungen der Deichsellängsachse zum Zugfahrzeug interpretiert werden, obwohl die gemessenen Winkelveränderungen möglicherweise auch auf Nick- oder Wankbewegungen des Zugfahrzeugs und des Anhängers zurückzuführen sein könnten. Eine Kugelkopfkupplung ist jedoch gerade für die Anhängung eines eigengelenkten Anhängers an ein Zugfahrzeug besonders geeignet, weil die Kugelkopfkupplung zwar große Freiheitsgrade für Relativbewegungen zulässt, dabei aber das Spiel zwischen den Kupplungskomponenten gering gehalten werden kann und sich genaue Geometrien für die Berechnung von Sollwerten für die Lenkung durch die Steuerung ergeben.

Nach einer Ausgestaltung der Erfindung ist es vorteilhaft, den Meßpunkt zwischen dem zugfahrzeugseitigen und dem anhängerseitigen Ende der Deichsel anzuordnen. Bei einer Positionierung des Meßpunktes in dieser Einbaulage ist ein ausreichender Bauraum verfügbar, um die für den Sensor benötigten Komponenten positionieren zu können. Beim Ankuppeln des Anhängers an das Zugfahrzeug und für eventuelle Wartungsarbeiten ist der Sensor sowie seine Bauteile gut zugänglich. Durch die Anbringung des Sensors an der genannten Stelle ist es zudem möglich, die Bauteile des Sensors von den Abmessungen her so zu normieren, dass ein Sensortyp an verschiedenen Fahrzeugen ohne größere Umbaumaßnahmen anbaubar ist. Dadurch ist der Sensor standardisierbar.

Nach einer weiteren Ausgestaltung der Erfindung ist der Sensor in einem Gehäuse angeordnet, das einen Teil der Deichsel bildet. Bei einer solchen Gestaltung des Sensors ist es möglich, den Sensor in die Deichsel selbst zu integrieren. Dadurch wird vom Sensor kein oder zumindest kaum ein zusätzlicher Bauraum beansprucht. Das Gehäuse kann über Anflanschflächen verfügen, mit denen es leicht zwischen das zugfahrzeugseitige Endstück der Kupplung und den übrigen Teil der Deichsel montiert werden kann. Hierdurch ist eine Nachrüstung von gebrauchten Anhängern besonders leicht. Auf diese Weise kann ein kompletter Fuhrpark eines Anwenders mit geringem Aufwand auf eine sensorbestückte Lenkung der Räder des Anhängers umgebaut werden.

Weitere Abwandlungen und bevorzugte Ausgestaltungen der Erfindung lassen sich der nachfolgenden gegenständlichen Beschreibung, den Merkmalen der Unteransprüche und den beigefügten Zeichnungen entnehmen.

Die Erfindung soll nachfolgend anhand eines Ausführungsbeispiels näher erläutert werden. Es zeigen:
- Fig. 1:: eine perspektivische Ansicht auf den Sensor,
- Fig. 2:: eine Ansicht auf den Sensor von oben in Neutralstellung, und
- Fig. 3:: eine Ansicht auf den Sensor von oben in ausgelenkter Stellung.

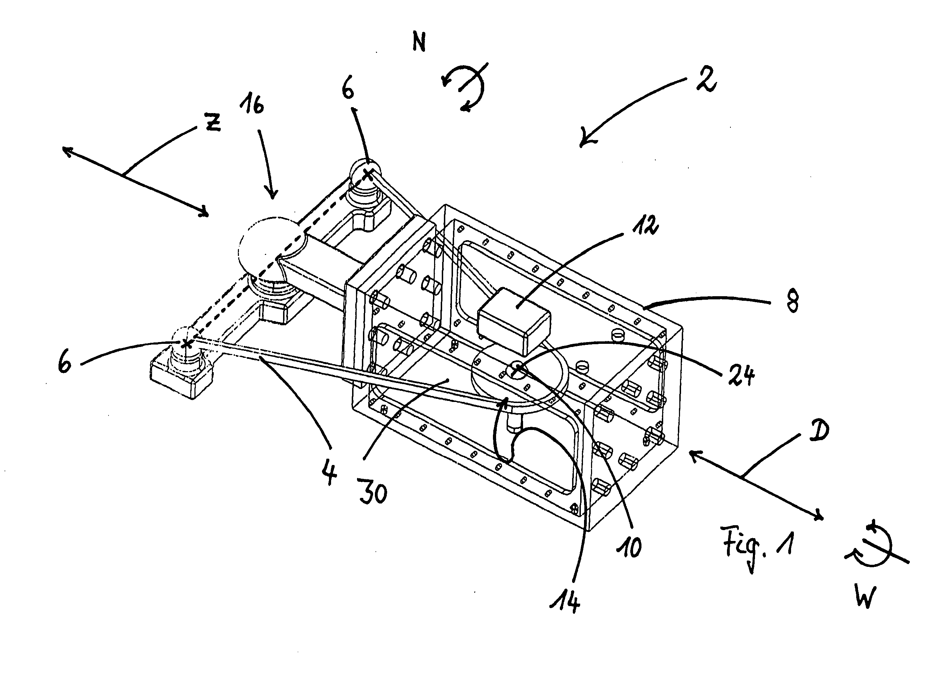

In Fig. 1 ist der Sensor 2 in einer perspektivischen Ansicht dargestellt. Der Sensor 2 verfügt über ein Kraftübertragungsmittel 4, das im Ausführungsbeispiel als Keil- oder Zahnriemen ausgebildet sein kann. Das Kraftübertragungsmittel 4 ist an zwei Befestigungspunkten 6 befestigt. Die Befestigungspunkte 6 befinden sich auf der Seite des Sensors 2, die dem Zugfahrzeug zugewandt ist. Die Befestigungspunkte 6 sind ortsfest am Zugfahrzeug angeordnet. Erfährt das Zugfahrzeug eine Lageveränderung in der horizontalen Ebene, insbesondere auch relativ zum Anhänger, so verändert sich dadurch auch die räumliche Lage der am Fahrzeug ortsfesten Befestigungspunkte 6, ebenfalls insbesondere relativ zum Anhänger. Bei einer derartigen Lageveränderung des Zugfahrzeugs verändert sich auch eine gedachte Linie zwischen den beabstandet zueinander angeordneten beiden Befestigungspunkten 6. Die zwischen den beiden Befestigungspunkten 6 gedachte Linie ist in Fig. 1 als gestrichelte Linie dargestellt. In Fig. 1 ist des weiteren die Längsachse Z des Zugfahrzeugs dargestellt, deren Lage sich bei einer horizontalen Lageveränderung des Zugfahrzeugs in gleicher Weise verändert wie die gedachte Linie. Insofern kann die Lageveränderung der beabstandet zueinander angeordneten Befestigungspunkte 6 als eine Bewegung ausgewertet werden, die einer tatsächlichen horizontalen Lageveränderung des Zugfahrzeuges entspricht.

Da vom Sensor der Winkel und/oder eine Veränderung des Winkels der Deichsellängsachse D zur Längsachse Z des Zugfahrzeugs ermittelt werden soll, ist es erforderlich, von den Befestigungspunkten 6 aus eine Meßrelation zur relativen Lage der Deichsellängsachse D zur Längsachse des Zugfahrzeugs Z herzustellen. Dies erfolgt in der Weise, dass auf der Deichsel 8 ein ortsfester Meßpunkt 10 bestimmt wird. Am Meßpunkt 10 kann dann die Relativbewegung, die das Kraftübertragungsmittel 4 bei einer Lageveränderung des Zugfahrzeugs in einer horizontalen Ebene ausführt, von einer Meßvorrichtung 12 erfaßt und zu einem Relativwinkel zwischen der Deichsellängsachse D und der Längsachse Z des Zugfahrzeugs ausgewertet werden. Da die Deichsel 8 über die Kupplung 16 fest mit dem Zugfahrzeug verbunden wird, ergibt sich bei einer horizontalen Lageveränderung des Zugfahrzeugs zwischen dem Zugfahrzeug und dem Anhänger eine Rotationsbewegung um den Punkt herum, an dem das Zugfahrzeug und der Anhänger aneinander gekuppelt sind. Aufgrund der Rotation des Zugfahrzeugs um den Kupplungspunkt herum und der entsprechenden Lageveränderung der am Zugfahrzeug befindlichen Befestigungspunkte 6 ergibt sich zwangsläufig eine Bewegung des Kraftübertragungsmittels, das im Bereich des Meßpunktes 10 mit der Deichsel 8 verbunden ist. Die Abstützung des Kraftübertragungsmittels 4 auf der Deichsel 8 als relative Bezugsgröße zur Ermittlung einer Relativbewegung ist erforderlich, um eine auswertbare Bewegung des Kraftübertragungsmittels 4 zu erzeugen.

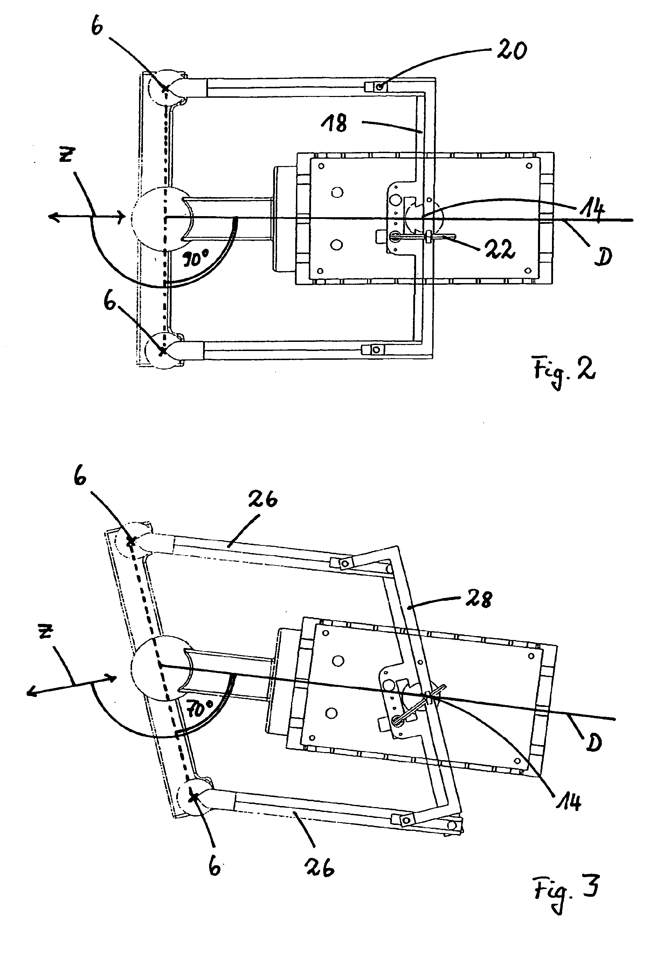

Ist das Kraftübertragungsmittel 4 als Gestänge ausgebildet, kann das Gestänge über ein Koppelgestänge 18 auf der Deichsel 8 abgestützt werden. Über Gelenke 20 kann das Koppelgestänge 18 wiederum mit dem übrigen Kraftübertragungsmittel 4 in Gestängeform verbunden sein. Auf diese Weise kann das Kraftübertragungsmittel 4 als eine Art Parallelogramm ausgebildet sein, das in Fig. 2 aus einer Ansicht von oben dargestellt ist. Das Kraftübertragungsmittel kann jedoch auch ein Treibriemen sein, der um eine auf der Deichsel 8 abgestützte Treibscheibe umläuft. Als Meßgröße für eine Veränderung des Winkels kann der Drehwinkel abgefragt werden, um den sich die Treibscheibe bewegt hat. Zur Feststellung eines absoluten Winkelmaßes kann auch die aktuelle Stellung der Treibscheibe abgefragt werden. Der Treibriemen, von dem das Kraftübertragungsmittel 4 gebildet ist, kann entweder so stramm um den Treibriemen gelegt sein, dass sich zwischen dem Treibriemen und der Treibscheibe eine kraftschlüssige Verbindung ergibt, oder der Treibriemen ist als ein Zahnriemen ausgebildet, der mit einer Verzahnung, die sich auf der Treibscheibe befindet, kämmt, und auf diese Weise sicherstellt, das jede Relativbewegung der Befestigungspunkte 6 in eine entsprechende Rotationsbewegung der Treibscheibe umgewandelt wird.

Ist das Kraftübertragungsmittel 4 wie in Fig. 2 abgebildet, als Gestänge gestaltet, so kann eine Bewegung des Gestänges mittels eines drehfest mit dem Gestänge verbundenen Anlenkhebels 22 über ein Drehpoti in einen elektrisch auswertbaren Meßwert umgewandelt werden.

An Stelle der vorstehend erläuterten Umwandlungstechniken einer rotativen, linearen oder bogenförmigen Bewegung in einen elektrischen Meßwert können auch alle anderen bekannten Umwandlungstechniken zur Auswertung der Bewegung erfindungsgemäß eingesetzt werden, wie beispielsweise auch eine optische, magnetische, widerstandsverändernde oder sonstige Umwandlung einer gemessenen Bewegung in einen die Bewegung oder die aktuelle Lage repräsentierenden elektronischen oder elektrischen Meßwert.

Durch die ortsfeste Abstützung des Meßpunktes 10 auf der Deichsel 8 wird jede Bewegung des Kraftübertragungsmittels 4 als eine relative Lageveränderung des Zugfahrzeugs zum Anhänger erkannt. Um zu vermeiden, dass Wankbewegungen W um die Wankachse der Deichsel 8 vom Sensor 2 als Lageveränderungen des Zugfahrzeugs relativ zum Anhänger erkannt werden, ist es erforderlich, den Meßpunkt 10 über einen Lagerpunkt 14 auf der Deichsel 8 abzustützen, der zumindest annähernd in der Wankachse der Deichsel 8 liegt. In dem in Fig. 1 dargestellten Ausführungsbeispiel wird die Treibscheibe über ein Kugelgelenk 24 auf der Deichsel 8 abgestützt, dessen Mittelpunkt den Lagerpunkt 14 bildet, der zumindest annähernd in der Wankachse der Deichsel 8 angeordnet ist. Je präziser der Lagerpunkt 14 in der Wankachse der Deichsel 8 liegt, um so geringer sind die Störeinflüsse aus Wankbewegungen des Zugfahrzeugs oder des Anhängers. Der Meßpunkt 10 kann dem Lagerpunkt 14 auch entsprechen.

In Fig. 2 mündet das Koppelgestänge 18 deichselseitig in eine mit der Deichsel 8 verbundenen Drehscheibe, deren Mittelpunkt dem Lagerpunkt 14 bzw. dem Meßpunkt 10 entspricht.

Wenn der Meßpunkt 10 und der Lagerpunkt 14 nicht identisch sind, ist es vorteilhaft, den Versatz zwischen diesen beiden Punkten durch eine Korrekturvorrichtung auszugleichen. Die Korrektur kann über mechanische Mittel erfolgen, oder die Korrektur wird elektronisch durch eine entsprechende Aufarbeitung der ermittelten Meßwerte des Sensors 2 vorgenommen.

Soll der Anhänger vom Zugfahrzeug abgekuppelt werden, so wird nicht nur die Kupplung 16 zwischen dem Zugfahrzeug und dem Anhänger gelöst, sondern es ist auch erforderlich, das Kraftübertragungsmittel 4 von den Befestigungspunkten 6 zu lösen. Umgekehrt ist es bei einem Zusammenkuppeln eines Zugfahrzeuges mit dem Anhänger erforderlich, nicht nur die Kupplungsverbindung herzustellen, sondern es muß auch das Kraftübertragungsmittel 4 mit den Befestigungspunkten 6 verbunden werden. Um die Kuppelvorgänge zu vereinfachen, ist es vorteilhaft, wenn die Verbindung des Kraftübertragungsmittels 4 mit den Befestigungspunkten 6 auf eine möglichst einfache Art und Weise vonstatten geht. Die Einfachheit und Funktionssicherheit in der Bedienung kann gesteigert werden, wenn die Verbindungselemente des Kraftübertragungsmittels 4 und der Befestigungspunkte 6 formschlüssig gestaltet sind, durch die Fehler bei der Herstellung der Verbindung nach Möglichkeit ausgeschlossen werden.

In Fig. 3 ist der Sensor 2 aus einer Ansicht von oben in einer ausgelenkten Stellung gezeigt. Es ist erkennbar, dass sich die horizontale Lage der in gestrichelter Linie dargestellten gedachten Linie zwischen den Befestigungspunkten 6 im Verhältnis zur Deichsellängsachse D gegenüber der in Fig. 2 abgebildeten Lage verändert hat. Während der Winkel zwischen der gestrichelten Linie und der Deichsellängsachse D in Fig. 2 etwa 90° beträgt, hat der in Fig. 3 gezeigte Winkel infolge der horizontalen Lageveränderung des Zugfahrzeugs relativ zum Anhänger nur noch einen Wert von 70°. Wie in Fig. 3 gut erkennbar ist, hat sich aufgrund der Lageveränderung der Befestigungspunkte 6 auch eine Bewegung des Kraftübertragungsmittels 4 ergeben. Durch die gegengerichtete Bewegung der Lenkerarme 26 hat die Verbindungsstange 28 eine Drehbewegung um den Lagerpunkt 14 herum ausgeführt, die von der Meßvorrichtung 12 auswertbar ist.

Beträgt der Winkel zwischen der Deichsellängsachse D und der Längsachse Z des Zugfahrzeugs in Fig. 2 volle 180°, beträgt dieser Winkel bei der in Fig. 3 dargestellten relativen Lage des Zugfahrzeuges und des Anhängers zueinander nur noch 160°.

Die in die Sensorsignale des Sensors 2 einfließenden Störeinflüsse können weiter verringert werden, wenn die Befestigungspunkte 6 zumindest annähernd in einer Achse zur Anhängung der Deichsel 8 am Zugfahrzeug angeordnet sind oder das Kraftübertragungsmittel 4, der Lagerpunkt 14 und/oder der Meßpunkt 10 einen flexiblen Längenausgleich in Richtung der Deichsellängsachse D aufweisen. Wie in Fig. 1 erkennbar ist, verläuft die gedachte Verbindungslinie zwischen dem Befestigungspunkten 6 genau durch den Mittelpunkt der Kupplung 16 hindurch. Ergeben sich zwischen dem Zugfahrzeug und dem Anhänger Nickbewegungen N, so stellen diese immer eine Rotationsbewegung um den Mittelpunkt des Kupplungspunktes der Kupplung 16 dar. Werden die Befestigungspunkte 6 so angeordnet, dass ihre Verbindungslinie genau der Achse entspricht, um die die Nickbewegungen zwischen dem Zugfahrzeug und dem Anhänger ausgeführt werden, so treten bei der Messung der horizontalen Lageveränderungen relativ zwischen dem Zugfahrzeug und dem Anhänger am Meßpunkt 10 keine Bewegungen des Kraftübertragungsmittels 4 ein, weil die auftretenden Nickbewegungen nicht eine Bewegung des Kraftübertragungsmittels 4 auslösen können. Auf diese Weise wird ausgeschlossen, dass Nickbewegungen zwischen dem Zugfahrzeug und dem Anhänger vom Sensor 2 als relative Veränderungen der horizontalen Lage erkannt werden könnten.

Ist es aus Gründen des verfügbaren Bauraums oder aus sonstigen Gründen nicht möglich, die Befestigungspunkte 6 zumindest annähernd in einer Achse zur Anhängung der Deichsel 8 anzuordnen, können die Nickbewegungen auch aus dem Meßbereich des Sensors 2 eliminiert werden, indem das Kraftübertragungsmittel 4, der Meßpunkt 10 oder der Lagerpunkt 14 einen flexiblen Längenausgleich aufweisen. In diesem Fall ist der Meßpunkt 10 bzw. der Lagerpunkt 14 nicht ortsfest, sondern um das Maß in Längsrichtung verlagerbar, das dem Maß entspricht, das eine Nickbewegung auf das Kraftübertragungsmittel ausübt.

Nach einer Ausgestaltung der Erfindung ist der Sensor 2 in einem Gehäuse 30 angeordnet, das in Fig. 1 erkennbar ist. In dem Gehäuse 30 ist der Sensor 2 gegen Beschädigung, Verschmutzung und Witterungseinflüsse geschützt. Das Gehäuse 30 verfügt an seinem dem Zugfahrzeug zugewandten Ende und an seinem dem Anhänger zugewandten Ende jeweils über Flanschflächen, über die zugfahrzeugseitig ein Kupplungsstück und anhängerseitig die Deichsel 8 mit dem Gehäuse 30 verbindbar ist. Auf diese Weise ist der Sensor 2 auf ideale Weise in die Deichsel 8 integrierbar. Das Gehäuse 2 weist seitliche Öffnungen auf, durch die das Kraftübertragungsmittel 4 durch den Innenraum des Gehäuses 30 hindurchführbar ist.

Der Sensor 2 ist unabhängig von einem Anhänger auch als eigenständiges Produkt darstellbar. Als eigenständiges Produkt ist er an einen beliebigen neuen Anhänger in der Produktion anbaubar, oder der Sensor 2 kann an Gebrauchtfahrzeugen nachgerüstet werden. Auf Basis des Sensors 2 kann ein Lenksystem auf dem Anhänger konfiguriert werden, das unabhängig ist vom Zugfahrzeug. Für die Anhängung des Anhängers an das Zugfahrzeug können auch handelsübliche Kupplungssysteme verwendet werden, an die der Sensor 2 dann auf eine geeignete Art angepaßt wird. Der Sensor 2 kann bei Anhängerfahrzeugen auch als aufpreispflichtige Option angeboten werden.

Die vorstehende Beschreibung der Erfindung anhand des Ausführungsbeispiels dient nur Erläuterungszwecken. Keinesfalls ist die Erfindung auf das beschriebene Ausführungsbeispiel beschränkt. Vielmehr ist es dem Fachmann möglich, die Erfindung auf eine ihm als geeignet erscheinende Art und Weise an einen konkreten Anwendungsfall anzupassen, soweit ihm dies zweckdienlich erscheint.

## Patentansprüche

1. Anhänger mit einer Deichsel (8), einer mit einer Steuerung versehenen Lenkvorrichtung und einem mit der Steuerung verbundenen Sensor (2), mit dem der Winkel und/oder eine Veränderung des Winkels der Deichsellängsachse (D) zur Längsachse (Z) eines Zugfahrzeugs ermittelbar ist, **dadurch gekennzeichnet, dass** der Sensor (2) ein Kraftübertragungsmittel (4) aufweist, das an zwei in horizontaler Richtung zueinander beabstandeten ortsfesten Befestigungspunkten (6) mit dem Zugfahrzeug verbindbar ist, der Sensor (2) einen ortsfest mit der Deichsel (8) verbundenen Meßpunkt (10) aufweist, an dem mit einer Meßvorrichtung (12) eine horizontale Lageveränderung einer Linie zwischen den genannten beabstandeten beiden Befestigungspunkten (6) relativ zur Deichsellängsachse (D) durch eine Auswertung der Bewegung des Kraftübertragungsmittels (4) im Verhältnis zum Meßpunkt (10) messbar ist, und der Meßpunkt (10) abgestützt ist auf einem Lagerpunkt (14), der zumindest annähernd in der Wankachse der Deichsel (8) angeordnet ist.

2. Anhänger nach Anspruch 1, **dadurch gekennzeichnet, dass** die Befestigungspunkte (6) zumindest annähernd in einer Achse zur Anhängung der Deichsel (8) am Zugfahrzeug angeordnet sind oder das Kraftübertragungsmittel (4), der Meßpunkt (10) und/oder der Lagerpunkt (14) einen flexiblen Längenausgleich in Richtung der Deichsellängsachse aufweisen.

3. Anhänger nach Anspruch 1 oder 2, **dadurch gekennzeichnet, dass** das Kraftübertragungsmittel (4) als Gestänge oder Treibriemen ausgebildet ist.

4. Anhänger nach einem der vorhergehenden Ansprüche, **dadurch gekennzeichnet, dass** der Anhänger mittels einer Kugelkopfkupplung mit dem Zugfahrzeug verbindbar ist.

5. Anhänger nach einem der vorhergehenden Ansprüche, **dadurch gekennzeichnet, dass** der Meßpunkt (10) zwischen dem zugfahrzeugseitigen und dem anhängerseitigen Ende der Deichsel (8) angeordnet ist.

6. Anhänger nach einem der vorhergehenden Ansprüche, **dadurch gekennzeichnet, dass** der Sensor (2) in einem Gehäuse angeordnet ist, das einen Teil der Deichsel (8) bildet.

7. Sensor (2), mit dem der Winkel und/oder eine Veränderung des Winkels einer Deichsellängsachse zur Längsachse eines Zugfahrzeugs ermittelbar ist, **dadurch gekennzeichnet, dass** der Sensor (2) ein Kraftübertragungsmittel (4) aufweist, das an zwei in horizontaler Richtung zueinander beabstandeten ortsfesten Befestigungspunkten (6) mit dem Zugfahrzeug verbindbar ist, der Sensor (2) einen ortsfest mit der Deichsel (8) verbundenen Meßpunkt (10) aufweist, an dem mit einer Meßvorrichtung (12) eine Veränderung der Lage einer Linie zwischen den genannten beabstandeten beiden Befestigungspunkten (6) in einer horizontalen Ebene relativ zur Deichsellängsachse durch eine Auswertung der Bewegung des Kraftübertragungsmittels (4) im Verhältnis zum Meßpunkt (10) messbar ist, und der Meßpunkt (10) abgestützt ist auf einem Lagerpunkt (14), der zumindest annähernd in der Wankachse der Deichsel (8) angeordnet ist.

8. Sensor (2) nach Anspruch 7, **dadurch gekennzeichnet, dass** der Sensor (2) die kennzeichnenden Merkmale eines der vorhergehenden Ansprüche 2 bis 6 aufweist.

## Claims

1. Trailer having a tow bar (8), a steering arrangement provided with a control system, and a sensor (2), connected to the control system, by which the angle of the longitudinal axis (D) of the tow bar to the longitudinal axis (Z) of a towing vehicle, and/or a change in this angle, can be determined, **characterised in that** the sensor (2) has a force-transmitting means (4) which can be connected to the towing vehicle at two fixed fastening points (6) which are spaced apart from one another in the horizontal direction, the sensor (2) has a point of measurement (10) which is connected to the tow bar (8) in a fixed position and at which a horizontal change in the position of a line running between the said two spaced-apart fastening points (6) relative to the longitudinal axis (D) of the tow bar can be measured by a measuring device (12) by an analysis of the movement of the force-transmitting means (4) in relation to the point of measurement (10), and the point of measurement (10) is supported on a mounting point (14) which is arranged at least approximately on the axis of roll of the tow bar (8).

2. Trailer according to claim 1, **characterised in that** the fastening points (6) are arranged at least approximately on an axis for the hitching of the tow bar (8) to the towing vehicle, or the force-transmitting means (4), the point of measurement (10) and/or the mounting point (14) have a flexible means for the correction of length in the direction of the longitudinal axis of the tow bar

3. Trailer according to claim 1 or 2, **characterised in that** the force-transmitting means (4) is in the form of linkages or drive belts.

4. Trailer according to one of the foregoing claims, **characterised in that** the trailer can be connected to the towing vehicle by means of a ball and socket joint.

5. Trailer according to one of the foregoing claims, **characterised in that** the point of measurement (10) is arranged between the ends of the tow bar (8) at its towing vehicle end and its trailer end.

6. Trailer according to one of the foregoing claims, **characterised in that** the sensor (2) is arranged in a housing which forms part of the tow bar (8).

7. Sensor (2) by which the angle of the longitudinal axis of a tow bar to the longitudinal axis of a towing vehicle, and/or a change in this angle, can be determined, **characterised in that** the sensor (2) has a force-transmitting means (4) which can be connected to the towing vehicle at two fixed fastening points (6) which are spaced apart from one another in the horizontal direction, the sensor (2) has a point of measurement (10) which is connected to the tow bar (8) in a fixed position and at which a change in a horizontal plane in the position of a line running between the said two spaced-apart fastening points (6) relative to the longitudinal axis of the tow bar can be measured by a measuring device (12) by an analysis of the movement of the force-transmitting means (4) in relation to the point of measurement (10), and the point of measurement (10) is supported on a mounting point (14) which is arranged at least approximately on the axis of roll of the tow bar (8).

8. Sensor (2) according to claim 7, **characterised in that** the sensor (2) has the characterizing features of one of foregoing claims 2 to 6.

## Revendications

1. Remorque comprenant un timon (8), un dispositif de direction doté d'une commande et un capteur (2) relié à la commande, avec lequel l'angle et/ou une modification de l'angle de l'axe longitudinal du timon (D) par rapport à l'axe longitudinal (Z) d'un véhicule tracteur peut être déterminé, **caractérisée en ce que** le capteur (2) présente un moyen de transmission de force (4), qui peut être relié au véhicule tracteur à deux points de fixation (6) fixes espacés l'un de l'autre dans le sens horizontal, le capteur (2) présente un point de mesure (10) relié de manière fixe au timon (8), au niveau duquel un changement de position horizontal d'une ligne entre lesdits deux points de fixation (6) espacés par rapport à l'axe longitudinal du timon (D) peut être mesuré avec un dispositif de mesure (12) par une évaluation du mouvement du moyen de transmission de force (4) par rapport au point de mesure (10) et le point de mesure (10) prend appui sur un point d'appui (14), qui est disposé au moins à peu près dans l'axe de roulis du timon (8).

2. Remorque selon la revendication 1, **caractérisée en ce que** les points de fixation (6) sont disposés au moins à peu près dans un axe d'accrochage du timon (8) sur le véhicule tracteur ou le moyen de transmission de force (4), le point de mesure (10) et/ou le point d'appui (14) présentent une compensation de longueur souple dans le sens de l'axe longitudinal du timon.

3. Remorque selon la revendication 1 ou 2, **caractérisée en ce que** le moyen de transmission de force (4) est réalisé sous forme de tringlerie ou de courroie d'entraînement.

4. Remorque selon l'une quelconque des revendications précédentes, **caractérisée en ce que** la remorque peut être reliée au véhicule tracteur à l'aide d'un accouplement à tête sphérique.

5. Remorque selon l'une quelconque des revendications précédentes, **caractérisée en ce que** le point de mesure (10) est disposé entre l'extrémité côté véhicule tracteur et l'extrémité côté remorque du timon (8).

6. Remorque selon l'une quelconque des revendications précédentes, **caractérisée en ce que** le capteur (2) est agencé dans un boîtier, qui forme une partie du timon (8).

7. Capteur (2), avec lequel l'angle et/ou une modification de l'angle d'un axe longitudinal du timon par rapport à l'axe longitudinal d'un véhicule tracteur peut être déterminé, **caractérisé en ce que** le capteur (2) présente un moyen de transmission de force (4), qui peut être relié au véhicule tracteur à deux points de fixation (6) fixes espacés l'un de l'autre dans le sens horizontal, le capteur (2) présente un point de mesure (10) relié de manière fixe au timon (8), au niveau duquel un changement de la position d'une ligne entre lesdits deux points de fixation (6) espacés dans un plan horizontal par rapport à l'axe longitudinal du timon peut être mesuré avec un dispositif de mesure (12) par une évaluation du mouvement du moyen de transmission de force (4) par rapport au point de mesure (10) et le point de mesure (10) prend appui sur un point d'appui (14), qui est disposé au moins à peu près dans l'axe de roulis du timon (8) .

8. Capteur (2) selon la revendication 7, **caractérisé en ce que** le capteur (2) présente les caractéristiques de l'une quelconque des revendications précédentes 2 à 6.
